# EUROPEAN PATENT APPLICATION

(11) **EP 4 358 276 A1**
(43) Date of publication of application: **24.04.2024**
(21) Application number: 22889061.2
(22) Date of filing: 10.10.2022
(51) Int. Cl.: H01M 50/514, H01M 50/249, H01M 50/264

(54) **BATTERY PACK AND VEHICLE**

(30) Priority: 08.11.2021 CN 202122718271 U
(71) Applicant: Contemporary Amperex Technology Co., Limited, Ningde, Fujian 352100 (CN)
(72) Inventor: FANG, Wumei, Ningde, Fujian 352100 (CN); JIANG, Liwen, Ningde, Fujian 352100 (CN); WU, Kai, Ningde, Fujian 352100 (CN)
(74) Representative: Rowlands, Stuart Michael
(86) International application number: PCT/CN2022/124443
(87) International publication number: WO 2023/078035

(57) **Abstract**

Provided in the present application are a battery pack and a vehicle, which relate to the technical field of batteries. The battery pack of the present application comprises a casing, a plurality of battery cells, a fixing assembly, and a busbar assembly. The casing has a cavity, and the plurality of battery cells are accommodated in the cavity. Each battery cell comprises an electrode terminal, and the electrode terminal protrudes from the battery cell. When the battery cells are arranged in the cavity, the electrode terminals face downwards. The fixing assembly is arranged below the battery cells and supports the battery cells, and the fixing assembly is provided with a connecting hole. The busbar assembly is arranged on the fixing assembly. The busbar assembly comprises a busbar portion for being electrically connected to at least two adjacent battery cells. The busbar portion comprises a connecting portion and at least two conduction portions, the connecting portion being connected to the at least two conduction portions, and each conduction portion being connected to the electrode terminal of one battery cell.

## Description

This application claims priority to Chinese Patent Application No. 202122718271.9, titled "BATTERY PACK AND VEHICLE," and filed on November 08, 2021, the entire disclosure of which is incorporated herein by reference.

### FIELD

The present disclosure relates to the field of battery technologies, and more particularly, to a battery pack and a vehicle.

### BACKGROUND

With the country's vigorous promotion and support of the field of new energy, the development of electric vehicles is becoming increasingly rapid. A battery pack, as a core component of the electric vehicles, plays a positive role in cruising range, safety, and reliability of the electric vehicles, and therefore after-sale maintenance of the power battery pack is particularly important. Currently, a mounting design of the commercially available battery pack is mostly an adhesive fixation or an adhesive fixation with an additional mechanical fastening, which is difficult to disassemble the battery pack. In addition, an electrical connection between battery cells is mostly achieved through welding of current collecting members, which means it is impossible for an after-sale service to disassemble and maintain a single battery cell. Therefore, how to conveniently disassemble and maintain the single battery cell has become an urgent problem to be solved.

### SUMMARY

The present disclosure provides a battery pack and a vehicle, aiming at realizing detachable maintenance of a single battery cell in the battery pack.

According to some embodiments of the present disclosure, there is provided a battery pack. The battery pack includes a case, a plurality of battery cells, a fixing assembly, and a current collecting assembly. The case has a cavity. The plurality of battery cells is received in the cavity. Each of the plurality of battery cells includes at least one electrode terminal protruding from the battery cell. The at least one electrode terminal faces downwards when the battery cell is arranged in the cavity. The fixing assembly is arranged below the plurality of battery cells and supports the plurality of battery cells. The fixing assembly has a connection hole. The current collecting assembly is arranged at the fixing assembly. The current collecting assembly includes a current collecting member configured to electrically connect at least two adjacent battery cells of the plurality of battery cells. The current collecting member includes a connection portion and at least two conductive portions. The connection portion is connected to the at least two conductive portions, and each of the at least two conductive portions is connected to the at least one electrode terminal of one of the plurality of battery cells. The at least one electrode terminal extends into the connection hole and is in contact with the conductive portion when the battery cell is arranged at the fixing assembly.

In some embodiments, the case includes a housing and an end cover. The housing is formed as the cavity and has an opening facing downwards. The end cover is configured to cover the opening. The fixing assembly is located between the plurality of battery cells and the end cover to allow for the assembling and fixing of the battery cells. In addition, the housing and the end cover can form a closed cavity configured to accommodate the plurality of battery cells, the fixing assembly, and the current collecting assembly.

In some embodiments, the fixing assembly further includes a first fixing plate and a second fixing plate. The first fixing plate has a mounting recess configured to accommodate the current collecting assembly. The second fixing plate covers the first fixing plate to fix the current collecting assembly in the mounting recess. The connection hole is defined at the second fixing plate and faces towards the conductive portion. The fixing assembly of a double-layer structure can allow the current collecting assembly to be arranged in the mounting recess of the fixing assembly to prevent the current collecting assembly from being pressed to be worn when the battery cells are placed. Meanwhile, the second fixing plate covers the first fixing plate to separate the current collecting assembly from the housing of the battery pack and the case of the battery cell, which in turn realizes insulation protection. In addition, the connection hole faces towards the conductive portion, which facilitates assembling and fixing of the electrode terminal.

In some embodiments, the mounting recess includes a first groove facing towards the connection hole. The first groove is configured for assembling and fixing of conductive portion. Meanwhile, the first groove faces towards the connection hole, and therefore the electrode terminal can easily extend into the connection hole to be in contact with the conductive portion.

In some embodiments, each of the at least two conductive portions includes a protrusion arranged in the first groove. The conductive portion has a second groove formed at a surface of the conductive portion opposite to the protrusion. The electrode terminal is inserted and engaged into the second groove. The protrusion is arranged at the conductive portion and configured to match with the first groove. Therefore, the conductive portion can be fixedly connected to the first fixing plate. The second groove of the conductive portion is configured to match with the electrode terminal on the battery cell, and therefore the current collecting member can be electrically connected to the electrode terminal to allow for the electrical connection between the battery cell and the current collecting assembly.

In some embodiments, the number of the protrusions is equal to the number of the first grooves, and one protrusion is arranged in one first groove. Therefore, each of the at least two conductive portions can be inserted into one first groove, and further, each of the at least two conductive portions can be connected to one of the at least one electrode terminal of one of the plurality of battery cell.

In some embodiments, a gap is formed between the protrusion and a bottom surface of the first groove. Therefore, when the battery cell is arranged on the fixing assembly, the gap can provide a predetermined mechanical pressing space for the conductive portion, thereby avoiding deformation of the conductive portion when the conductive portion is pressed under gravity of the battery cell, which would affect electrical connection performance of the conductive portion.

In some embodiments, the current collecting assembly further includes a sampling member arranged in the fixing assembly and electrically connected to the current collecting member. The sampling member is configured to collect a current signal and/or a temperature signal of the battery cell to monitor an operating state of each battery cell. Further, the sampling member is arranged inside the fixing assembly, and therefore the sampling member can be protected from being exposed outside the fixing assembly. In this way, electric leakage of the sampling member can be avoided, and a wear degree of the sampling member can be reduced.

In some embodiments, the sampling member and the current collecting member are integrally formed through injection molding. In this way, a high degree of integration facilitates the current collecting assembly to be assembled in the mounting recess and simplifies production process with an increase in productivity.

In some embodiments, the current collecting assembly includes a plurality of current collecting members arranged at intervals at a side of the sampling member. Since one current collecting member includes at least two conductive portions, and each of the at least two conductive portions is connected to one of the at least one electrode terminal of one of the plurality of battery cells, one of the plurality of current collecting members enables an electrical connection between at least two battery cells. The plurality of current collecting members arranged at intervals can enable all battery cells in the battery pack to form a circuit.

In some embodiments, in a vertical direction, the at least one electrode terminal is in contact fit with the conductive portion or is connected to the conductive portion by a conductive adhesive. Since the at least one electrode terminal is in contact fit with the conductive portion or is connected to the conductive portion by the conductive adhesive, reliability of the electrical connection between the at least one electrode terminal and the conductive portion can be ensured. Therefore, a series and/or parallel connection can be formed between the plurality of battery cells, which ensures stability of the internal circuit connection of the battery pack. In addition, compared with assembling methods such as welding, the single battery cell can be easily separated from the current collecting assembly through the assembling method such as the contact fit or the conductive adhesive.

According to some embodiments of the present disclosure, there is provided a vehicle. The vehicle includes the battery pack described above. The battery pack serves as a core component of the vehicle. In technical solutions of the embodiments of the present disclosure, removable maintenance of the single battery cell can be easily realized in the battery pack. In this way, durability of the battery pack is improved. Therefore, a cruising range of the vehicle can be ensured, and a service life of the vehicle can be prolonged.

In the battery pack according to the embodiments of the present disclosure, the battery cell is placed in an inverted manner and fixedly connected to the fixing assembly through the gravity of the battery cell. In addition, the housing and the end cover cooperate with the battery cell and the fixing assembly to allow the battery cell to be connected to the housing without an adhesive. Thus, the battery cell can be disassembled. Further, the current collecting assembly is arranged in the mounting recess of the fixing assembly, and the electrode terminal of the battery extends into the connection hole to be in contact with the conductive portion. In this way, the electrical connection can be realized without the welding. In addition, wear of the current collecting assembly can be reduced with improvement of durability of the battery pack. Therefore, in a practical application scenario, when a single battery cell fails, the battery pack of the present disclosure can achieve the detachable maintenance of the single battery cell, thereby lowering maintenance cost of the battery pack and ensuring a reliable cruising range and the service life of the vehicle.

### Beneficial Effects

In the technical solutions of the embodiments of the present disclosure, the plurality of battery cells is placed in the battery pack in the inverted manner, and therefore the detachable connection of the battery cells in the battery pack can be realized through the gravity of the battery cells and the cooperation between the battery cells and the fixing assembly, without connecting the battery cells to the case through the adhesive. Moreover, the connection hole is defined at the fixing assembly and the current collecting assembly is arranged in the fixing assembly. Therefore, the electrode terminal can be inserted and engaged into the current collecting assembly through the connection hole to allow for the electrical connection between the battery cells. In addition, the inserted and engaged arrangement between the connection hole and the electrode terminal can also limit the battery cells in both horizontal and vertical direction to enable the battery cell to be stably maintained in the battery pack. Therefore, in the battery pack of the present disclosure, the single battery cell can be easily separated from the battery pack. Thus, the detachable maintenance of the single battery cell in the battery pack is realized.

### BRIEF DESCRIPTION OF THE DRAWINGS

In order to clearly explain technical solutions of embodiments of the present disclosure, drawings used in description of the embodiments or the related art will be briefly described below. The drawings described below merely illustrate some embodiments of the present disclosure. Based on these drawings, other drawings can be obtained by those skilled in the art without creative effort.
FIG. 1 is a schematic structural view of a vehicle according to some embodiments of the present disclosure.
FIG. 2 is an exploded view of a battery pack according to some embodiments of the present disclosure.
FIG. 3 is an exploded view of a battery pack according to some embodiments of the present disclosure in another direction.
FIG. 4 is an isometric view of a battery cell according to some embodiments of the present disclosure.
FIG. 5 is a top view of a fixing assembly according to some embodiments of the present disclosure.
FIG. 6 is a cross-sectional view of the fixing assembly illustrated in FIG. 5 taken along line A-A.
FIG. 7 is a partial enlarged view at part B illustrated in FIG. 6.
FIG. 8 is a partial enlarged view of the first fixing plate at part B illustrated in FIG. 6.
FIG. 9 is a schematic structural view of a current collecting assembly according to an embodiment of the present disclosure.
FIG. 10 is a schematic structural view of a current collecting assembly according to another embodiment of the present disclosure.

In the accompanying drawings, the drawings are not necessarily drawn to scale.

### Description of reference numerals:

100-vehicle;
1-battery pack;
10-case; 11-housing; 12-end cover
13-battery cell; 131-electrode terminal;
14-fixing assembly; 141-first fixing plate; 1411-mounting recess; 1411a-first groove; 142-second fixing plate; 1421-connection hole;
15-current collecting assembly; 151-current collecting member; 1511-conductive portion; 1511a-protrusion; 1511b-second groove; 1512-connection portion; 152-sampling member.

### DETAILED DESCRIPTION

Implementations of the present disclosure will be described in further detail below with reference to the accompanying drawings and embodiments. The detailed description of the following embodiments and the accompanying drawings are intended to illustrate the principles of the present disclosure, but should not be construed as limiting the scope of the present disclosure. That is, the present disclosure is not limited to the described embodiments.

In the description of the present disclosure, it should be noted that "a plurality of" means more than two (including two), unless specified otherwise; and terms such as "over," "below," "left," "right," "in," "out," "vertical," "horizontal," "top," "bottom," etc., refer to the directions and location relations which are for describing the present disclosure and for describing in simple, and which are not intended to indicate or imply that the device or the elements are disposed to locate at the specific directions or are structured and performed in the specific directions, which could not to be understood to the limitation of the present disclosure. In addition, terms such as "first," "second," "third," etc., are used herein for purposes of description and are not intended to indicate or imply relative importance or significance. The "Vertical" is not strictly perpendicular, but within the range of the allowable error. The "horizontal" is not strictly parallel, but within the range of the allowable error.

Reference herein to "an embodiment" means that a particular feature, structure or characteristic described in conjunction with the embodiment can be included in at least one embodiment of the present disclosure. Appearances of this phrase in various places in the specification are not necessarily all referring to the same embodiment, nor are separate or alternative embodiment mutually exclusive of other embodiments. Those skilled in the art understand, both explicitly and implicitly, that the embodiments described herein may be combined with other embodiments.

In the present disclosure, "and/or" describes an association relationship between correlated objects, including three relationships. For example, "A and/or B" can mean A only, B only, or both A and B. in addition, the symbol "/" generally indicates an "or" relationship between the correlated objects preceding and succeeding the symbol.

In the description of the present disclosure, the term "a plurality of" refers to more than two (including two). Similarly, "a plurality of groups" refers to more than two groups (including two groups), and "a plurality of pieces" refers to more than two pieces (including two pieces).

In the embodiments of the present disclosure, the same reference numerals represent the same components, and detailed descriptions of the same components are omitted in different embodiments for brevity. It should be understood that a thickness, length, width, and other dimensions of various components in the embodiments of the present disclosure shown in the accompanying drawings, as well as an overall thickness, length, width, and other dimensions of an integrated device are only explanatory, and should not constitute any limitation to the present disclosure.

The orientation words used in the following description are the directions shown in the drawings and do not limit the specific structure of the present disclosure. In the description of the present disclosure, unless specified or limited otherwise, the terms "mounted," "connected," "coupled" and "fixed" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components or interaction relations between two components, which can be understood by those skilled in the art according to the detail embodiment of the present disclosure.

Currently, from the development of the market situation, an application of power batteries is becoming increasingly widespread. The power battery are not only used in an energy storage power system such as hydro, thermal, wind, and solar power stations, but also widely used in electric transport such as electric bicycles, electric motorcycles, electric vehicles, as well as other fields such as military equipment and aerospace. As the application scope of power batteries continues to expand, the demand in the market is also steadily increasing. In addition, with the country's vigorous promotion and support of the field of new energy, the development of the electric vehicles is becoming increasingly rapid. Battery pack serves as a core component of the electric vehicles, and therefore after-sale maintenance of the power battery pack is particularly important.

It has been found that a mounting design of the commercially available battery pack is mostly an adhesive fixation or an adhesive fixation with additional mechanical fastening. In this way, the battery pack becomes a part of the electric vehicle that cannot be disassembled separately. Consequently, it is difficult to disassemble the battery pack. In addition, a current collecting assembly between the battery cells is mostly welded to an electrode terminal of the battery cells to realize a series and/or parallel connection between the battery cells. However, in actual use, it is inevitable that there is a risk of failure of a single battery cell. When a certain battery cell fails, it is difficult to separate the failed battery cell from the current collecting assembly. Only a group of battery modules is often disassembled from the battery pack first, and then the failed battery cell is disassembled and replaced. The entire process is cumbersome and costly. The entire battery pack will be even directly replaced. This maintenance method is expensive and wasteful of materials and resources, and is not in line with the concept of sustainable development of new energy.

In order to solve the problem of the difficulty of removing the single battery cell in the battery pack, it has been found that a gravity of the battery cell can be used to realize a fixed connection between the battery cells and the housing and a fixed connection between the electrode terminal and the current collecting assembly. In this way, the battery cells can be fixedly connected to the housing without an adhesive, and the battery cells can be electrically connected to each other without being welded to the current collecting assembly.

In view of the above, embodiments of the present disclosure provide a battery pack, which is capable of easily realize disassembly and maintenance of a single battery cell. In an exemplary embodiment, a fixing assembly has a mounting recess and a battery cell is placed in an inverted manner. The battery cell may generate a force due to its own gravity to allow an electrode terminal on the battery cell to extend into a connection hole to be fixedly connected to the fixing assembly. Meanwhile, the current collecting assembly is disposed in the mounting recess of the fixing assembly to match with the electrode terminal of the battery cell, thereby realizing the electrical connection between the battery cells. Through the inverted design of the battery cell and the cooperation between the fixing assembly and the current collecting assembly, the gravity of the battery cell in a vertical direction can be utilized to realize the fixing and electrical connection of the battery cell and detachable maintenance of a single battery cell in the battery pack.

The battery pack disclosed in embodiments of the present disclosure may be, but is not limited to, applied in an electrical device such as a vehicle, a ship, or an aircraft. The electrical device may be, but is not limited to, an electric toy, a power tool, a battery car, an electric vehicle, a ship, a spacecraft, etc. The electric toy may include a stationary or mobile electric toy, such as an electric car toy, an electric boat or ship toy, an electric airplane toy, and the like. The spacecraft may include an airplane, a rocket, a space shuttle, and a spacecraft, etc.

In addition, the battery pack according to the embodiments of the present disclosure may be used to form a power system of the electrical device. In this way, when the single battery cell fails, the detachable maintenance of the single battery cell can be realized to ensure reliability and stability of the electrical device and lower maintenance cost of the battery pack.

A vehicle 100 is taken as an example of an electrical device according to an embodiment of the present disclosure in the following embodiments for convenience of illustration.

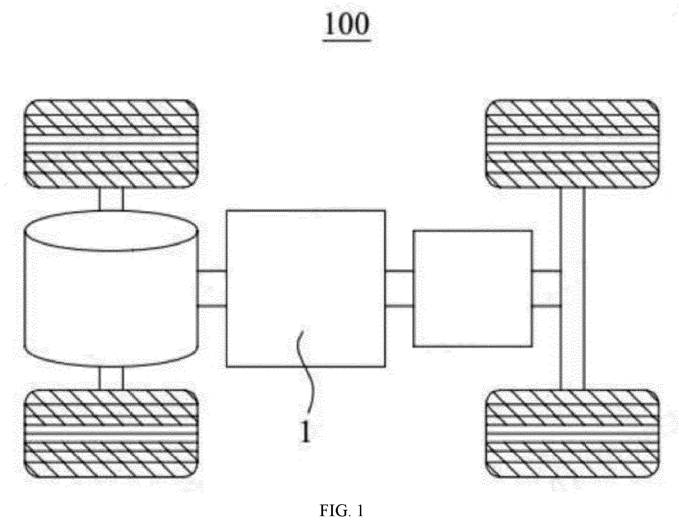

Referring to FIG. 1, which is a schematic structural view of a vehicle according to some embodiments of the present disclosure, the vehicle 100 may be a fuel vehicle, a gas vehicle, a new energy vehicle, a motorcycle, or the like. The new energy vehicle may be a purely electric vehicle, a hybrid vehicle, or a supercharged programmed vehicle, etc., and the present disclosure is not limited to the above-mentioned vehicle 100.

The vehicle 100 is internally provided with a battery pack 1. The battery pack 1 may be disposed at a bottom or a head or a tail of the vehicle 100 to flexibly adjust a position of the battery pack 1 in combination with characteristics of the vehicle 100, and thus fully utilize a mounting space of the vehicle 100. The battery pack 1 may be configured for power supply of the vehicle 100. In some embodiments of the present disclosure, the battery pack 1 may serve not only as an operating power supply of the vehicle 100, but also as a driving power supply of the vehicle 100.

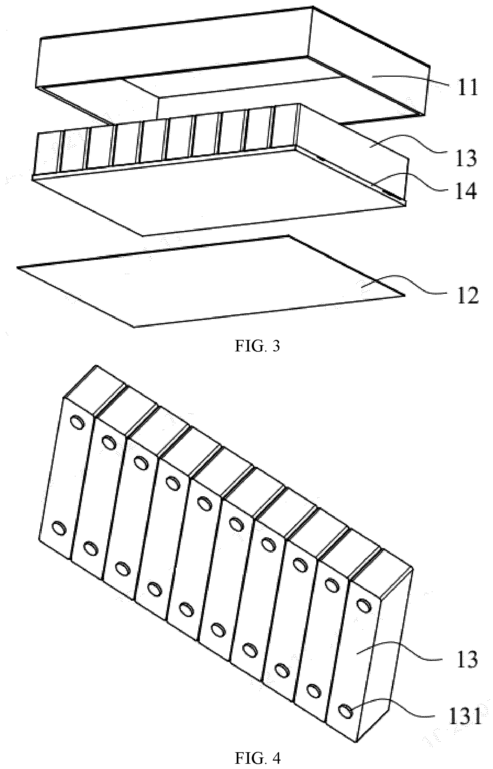

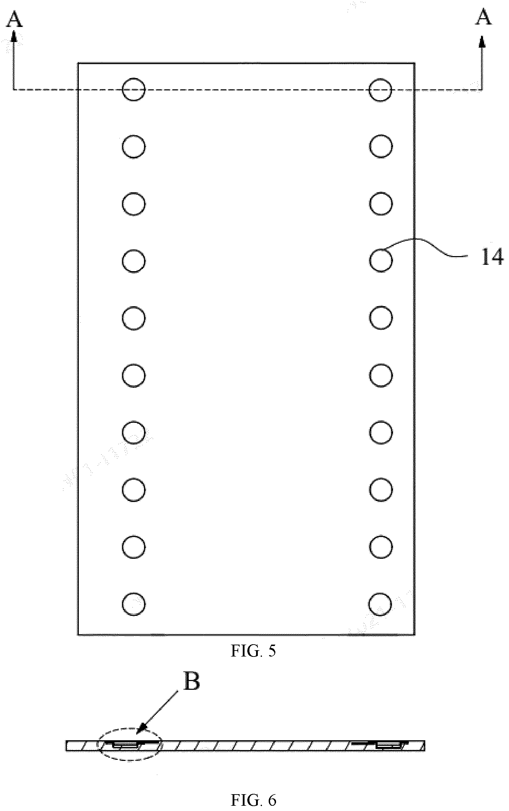

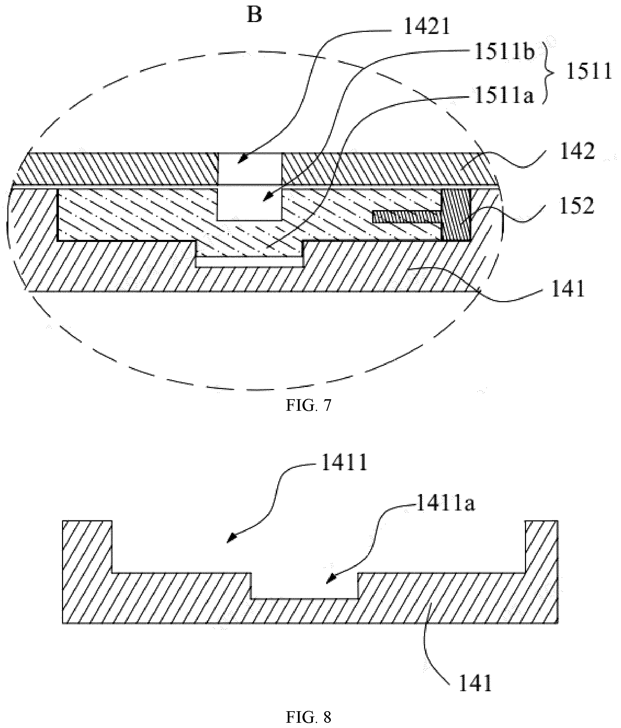

According to some embodiments of the present disclosure, please refer to FIGS. 2 to 10, FIGS. 2 and 3 are exploded views of a battery pack 1 according to some embodiments of the present disclosure, FIG. 4 is an isometric view of a plurality of battery cells 13, FIG. 5 is a top view of a fixing assembly 14 according to some embodiments of the present disclosure, FIG. 6 is a cross-sectional view of the fixing assembly 14 illustrated in FIG. 5 taken along line A-A, FIGS. 7 and 8 are partial enlarged views at part B illustrated in FIG. 6, and FIGS. 9 and 10 are schematic structural views according to two embodiments of a current assembly, respectively. Embodiments of the present disclosure disclose a battery pack 1. The battery pack 1 includes a case 10, a plurality of battery cells 13, a fixing assembly 14, and a current collecting assembly 15. The case10 has a cavity (not shown). The plurality of battery cells 13 are received in the cavity. Each of the battery cells 13 includes at least one electrode terminal 131 protruding from the battery cell 13. The at least one electrode terminal 131 faces downwards when the battery cell 13 is arranged in the cavity. The fixing assembly 14 is arranged below the plurality of battery cells 13 and supports the plurality of battery cells 13. The fixing assembly 14 has a connection hole 1412. The current collecting assembly 15 is arranged at the fixing assembly 14 and includes a current collecting member 151 configured to electrically connect at least two adjacent battery cells 13 of the plurality of battery cells 13. The current collecting member 151 includes a connection portion 1512 and at least two conductive portions 1511. The connection portion 1512 is connected to the at least two conductive portions 1511. Each of the at least two conductive portions 1511 is connected to one of the at least one electrode terminal 131 of the plurality of battery cells 13. The at least one electrode terminal 131 extends into the connection hole 1412 and is in contact with the conductive portion 1511 when the battery cell 13 is arranged at the fixing assembly 14.

The battery pack 1 according to the embodiments of the present disclosure refers to a single physical module including a plurality of battery cells 13 to provide a higher voltage and capacity and is an ultimate state of a battery system loaded into the vehicle 100. The battery pack 1 generally includes a case 10 configured to encapsulate the plurality of battery cells 13. The case 10 can prevent liquids or other foreign matters from affecting charging or discharging of the battery cell 13. Most current battery packs 1 are made by assembling a battery management system (BMS), thermal management components, and various other control and protection systems on one or more battery modules. With the development of technology, the battery module level can be omitted, i.e., the battery pack 1 may be formed directly by the battery cells 13. This improvement lead to an increase in a weight energy density and a volume energy density of the battery system while significantly reducing the number of components of the battery system.

The battery cell 13 is the smallest unit of the battery pack 1. The battery cell 13 may include a lithium-ion battery, a lithium-sulfur battery, a sodium-ion battery, or a magnesium-ion battery, etc., and the embodiments of the present disclosure are not limited thereto. The battery cell 13 may be in a cylindrical, flat, or cuboidal shape, or other shapes, and the embodiments of the present disclosure are not limited thereto. The battery cell 13 is generally categorized into three types based on an encapsulation manner, including a cylindrical battery cell, a square-shaped battery cell, and a soft-packed battery cell, and the embodiments of the present disclosure are not limited thereto. The plurality of battery cells 13 may be connected in series and/or in parallel via the electrode terminals 131 for various applications.

Referring to FIG. 4, the electrode terminal 131 is disposed at a side of the battery cell 13, and one battery cell 13 has two electrode terminals 131. The electrode terminal 131 may be of an integrated structure, e.g., the electrode terminal 131 is an integrated post structure. The electrode terminal 131 may also be of a separate structure. The electrode terminal 131 includes a pole configured for an electrical connection to the current collecting assembly 15. The electrode terminal 131 is made of a conductive material. In addition, the electrode terminal 131 may be in a cylindrical, flat, or cuboidal shape, or other shapes, and the embodiments of the present disclosure are not limited thereto.

The fixing assembly14 is a component of the battery pack1 configured for a fixed connection of the plurality of battery cells 13. The fixing assembly14 is located between the plurality of battery cells 13 and the end cover 12. The fixing assembly 14 internally has a mounting recess 1411. The mounting recess 1411 is configured for placement of the current collecting assembly 15 to ensure stability of the electrical connection of the current collecting assembly 15 and to reduce electric leakage and a wear degree caused by exposure of the current collecting assembly 15. Therefore, the fixing assembly 14 may be made of an insulation material with a predetermined strength, such as fluoroelastomer.

The current collecting assembly 15 is a component of the battery pack 1 configured for an electrical connection between the plurality of battery cells 13. The "electrical connection" described in the embodiments of the present disclosure may be a parallel connection or a series connection or a hybrid connection. The current collecting assembly 15 is configured for the electrical connection between the battery cells 13 through the electrode terminal 131 for connecting the battery cells 13. The current collecting assembly 15 includes a current collecting member 151 and a sampling member 152. The current collecting member 151 includes a conductive portion 1511. In some embodiments of the present disclosure, the current collecting member151 includes a connection portion 1512 and at least two conductive portions 1511. The connection portion 1512 is connected to the at least two conductive portions 1511, and each of the at least two conductive portions 1511 is directly connected to one of the at least one electrode terminal 131 of one of the plurality of battery cells 13. The at least one electrode terminal 131 extends into the connection hole 1412 and is in contact with the conductive portion 1511 when the battery cell 13 is arranged on the fixing assembly14. The "contact" may be a point contact, a line contact, or a surface contact. In an exemplary embodiment, a contact between the conductive portion 1511 and the electrode terminal 131 is the surface contact. Since a "high voltage cavity" (not shown) provides a mounting space for the battery cell 13 and the current collecting assembly 15, the electrical connection formed by the current collecting assembly 15 may also be referred to as a "high voltage connection".

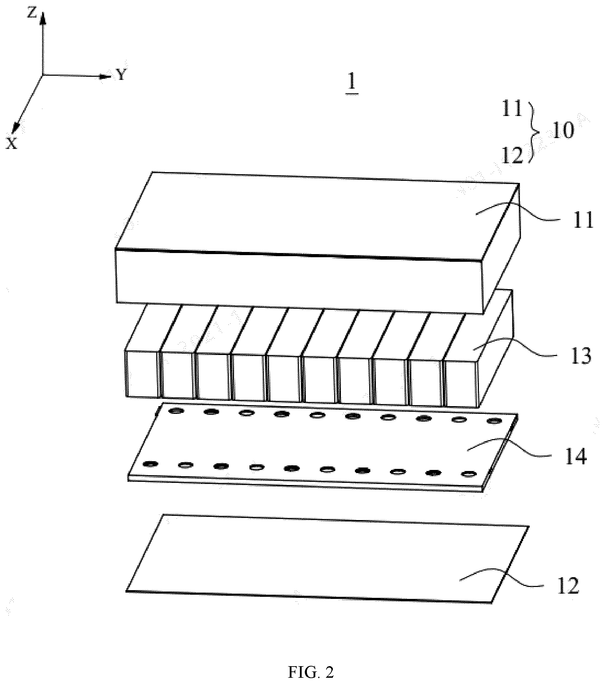

Terms "below" and "facing downwards" refer to a direction facing downwards in a vertical direction. The "vertical direction" described above is a direction of gravity. Referring to FIG. 2, illustratively, the vertical direction is a "Z" direction. In some embodiments of the present disclosure, in the vertical direction, the housing 11 has an opening facing downwards, and a side of the battery cell 13 on which the electrode terminal 131 is arranged also faces downwards. In this way, the battery cell 13 can be fixedly connected to the fixing assembly 14 by its own gravity.

A plurality of battery cells 13 is placed in the battery pack 1 in an inverted manner (i.e., the electrode terminal 131 faces downwards), and therefore the detachable connection of the battery cells 13 in the battery pack 1 can be realized through the gravity of the battery cells 13 and the cooperation between the battery cells 13 and the fixing assembly 14, without connecting the battery cells 13 to the case 10 through the adhesive. On the other hand, the connection hole 1412 is defined at the fixing assembly 14, and the current collecting assembly 15 is arranged in the fixing assembly 14. Therefore, the electrode terminal 131 can be inserted and engaged into the current collecting assembly 15 through the connection hole 1412 to allow for the electrical connection between the battery cells 13. In addition, the inserted and engaged arrangement of the connection hole 1412 and the electrode terminal 131 can also limit the battery cells 13 in the horizontal and vertical direction to enable the battery cells 13 to be stably maintained in the battery pack 1. Therefore, in the battery pack 1 according to the present disclosure, the single battery cell 13 can be easily separated from the battery pack 1. Thus, the detachable maintenance of the single battery cell 13 in the battery pack 1 can be realized.

According to some embodiments of the present disclosure, with continued reference to FIG. 2, the case 10 includes a housing 11 and an end cover 12. The housing 11 is formed as the cavity, and has an opening facing downwards. The end cover12 is configured to cover the opening. The fixing assembly 14 is located between the plurality of battery cells 13 and the end cover 12.

The case 10 is a closed accommodation space formed by cooperating the housing 11 with the end cover12 together. The closed accommodation space is configured to prevent liquids or other foreign matters from affecting charging or discharging of the battery cell 13.

The housing 11 is a component configured to cooperate with the end cover 12 to form an internal environment of the battery pack 1. The formed internal environment may be used to accommodate the battery cells 13, the fixing assembly 14, and other components. The housing 11 and the end cover 12 may be components independent of each other. An opening may be defined at the housing 11, and the end cover 12 covers the opening to form the internal environment of the battery pack 1. Without limitation, the end cover 12 and the housing 11 may be formed integrally. In some embodiments, the end cover 12 and the housing 11 may together form a common connection surface before the other components are placed into the case. Then, the end cover 12 may cover the housing 11 when it is necessary to encapsulate an inner side of the housing 11. The housing 11 may be in various shapes and sizes, such as a cuboidal shape, a cylindrical shape, and a hexagonal shape, etc. In some embodiments, the shape of the housing 11 may be determined based on a specific shape and size of the battery cell 13. The housing 11 may be made of various materials such as copper, iron, aluminum, stainless steel, aluminum alloy, plastic, etc., and the embodiments of the present disclosure are not limited in this regard.

The end cover 12 is a component covering the opening of the housing 11 to isolate the internal environment of the battery pack 1 from the external environment. Without limitation, the shape of the end cover 12 may be adapted to the shape of the housing 11 to match with the housing 11. In some embodiments, the end cover 12 may be made of a material having a predetermined hardness and strength (e.g., an aluminum alloy). In this way, the end cover 12 is less likely to be deformed when being subjected to a crush and collision. Therefore, the battery pack 1 has a higher structural strength and improved safety performance. The end cover 12 may be various materials, such as copper, iron, aluminum, stainless steel, aluminum alloy, plastic, etc., and the embodiments of the present disclosure are not limited in this regard.

The fixing assembly 14 is located between the plurality of battery cells 13 and the end cover 12, which facilitates assembling and fixing of the battery cells 13. In addition, the housing 11 and the end cover 12 may form the closed cavity configured to accommodate the plurality of battery cells 13, the fixing assembly 14, and the current collecting assembly 15.

According to some embodiments of the present disclosure, referring to FIGS. 5 to 8, the fixing assembly 14 includes a first fixing plate 141 and a second fixing plate 142. The first fixing plate 141 has a mounting recess 1411 configured for a mounting of the current collecting assembly 15. The second fixing plate 142 covers the first fixing plate 141 to fix the current collecting assembly 15 in the mounting recess 1411. The connection hole 1421 is defined at the second fixing plate 142 and faces towards the conductive portion 1511.

In an exemplary embodiment, the battery cell 13 is connected to the fixing assembly 14 in such a manner that the electrode terminal 131 is first inserted into the fixing assembly 14 through the connection hole 1421 at the second fixing plate 142. The shape, size, and number of the connection holes 1421 match with the shape, size and number of the electrode terminals 131. Subsequently, the electrode terminal 131 extends into the first fixing plate 141 and is in contact with the current collecting assembly 15 assembled in the fixing assembly 14. The specific contact portion is the conductive portion 1511.

By designing the fixing assembly 14 of a double-layer structure, the current collecting assembly 15 can be arranged in the mounting recess 1411 of the fixing assembly 14 to prevent the current collecting assembly 15 from being pressed to be worn when the battery cells 13 are placed. Meanwhile, the second fixing plate 142 covers the first fixing plate 141 to separate the current collecting assembly 14 from the housing of the battery pack and the case of the battery cell, which in turn realizes insulation protection. In addition, the connection hole 1421 faces towards the conductive portion 1511, which facilitates assembling and fixing of the electrode terminal 13.

According to some embodiments of the present disclosure, referring to FIGS. 7 and 8, the mounting recess 1411 includes a first groove 1411a facing towards the connection hole 1412.

The first groove 1411a is additionally formed at the mounting recess 1411 to meet needs of the mounting of the current collecting assembly 15. A shape of the first groove 1411a may be determined based on a specific shape of the conductive portion 1511. For example, when the conductive portion 1511 has a cylindrical structure, a shape of the first groove 1411a may be selected as a cylindrical structure, and when the conductive portion 1511 has a cuboidal structure, a shape of the first groove 1411a may be selected as a cuboidal structure. In FIG. 7, illustratively, each of the conductive portion 1511 and the first groove 1411a has a cylindrical structure.

The first groove 1411a is defined in the mounting recess1411 and configured for the assembling and fixing of the conductive portion 1511. Meanwhile, the first groove 1411a faces towards the connection hole 1412, and therefore the electrode terminal 131 can easily extend into the connection hole 1412 and be in contact with the conductive portion 1511.

According to some embodiments of the present disclosure, with continued reference to FIGS. 7 and 8, each of the least two conductive portions 1511 includes a protrusion 1511a arranged in the first groove 1411a. The conductive portion 1511 includes a second groove 1511b formed on a surface of the conductive portion 1511 opposite to the protrusion 1511a. The electrode terminal 131 is inserted and engaged into second groove1511b.

The conductive portion 1511 is provided with the protrusion 1511a configured to match with the first groove 1411a to allow the conductive portion 1511 to be fixedly connected to the first fixing plate 141. The second groove 1511b formed by the conductive portion 1511 is configured to match with the electrode terminal 131 on the battery cell 13, and therefore the current collecting member 151 is electrically connected to the electrode terminal 131 to realize the connection between the battery cells 13.

It is further understood that when the electrode terminal 131 is in contact with the conductive portion 1511, the electrode terminal 131 first extends into the second groove 1511b and abuts with a side of the protrusion 1511a. Subsequently, a force is exerted to the protrusion 1511a by the electrode terminal 131 to embed the protrusion 1511a in the first groove 1411a, thereby realizing fixing and connection of the electrode terminal 131 in the fixing assembly 14.

According to some embodiments of the present disclosure, the number of the protrusions 1511a is equal to the number of the first grooves 1411a. Each of the protrusion 1511a is arranged in the first groove 1411a.

As a result, it is possible to ensure that each of the conductive portions 1511 is inserted in the first groove 1411a. Further, it is possible to allow each of the conductive portions 1511 to be connected to one of the electrode terminals 131 of one of the plurality of battery cells 13.

According to some embodiments of the present disclosure, with continued reference to FIG. 7, a gap is formed between the protrusion 1511a and a bottom surface of the first groove 1411a.

The phase "bottom surface of the first groove 1411a" refers to a horizontal surface of the first groove 1411a close to the protrusion 1511a of the conductive portion 1511. When the current collecting assembly 15 is assembled in the fixing assembly 14, a predetermined space, i.e., a gap, is reserved between the protrusion 1511a and the first groove 1411a. As a result, when the gravity of the battery cell 13 is transferred to the fixing assembly 14, the electrode terminal 131 is presses against the protrusion 1511a of the conductive portion1511. The presence of the gap can provide a mechanical pressing space for the protrusion1511a, avoiding the protrusion 1511a from being pressed directly against the bottom surface of the first groove1411a. Therefore, it is possible to effectively avoid deformation of the protrusion1511a. When no gap is formed, the protrusion 1511a may be deformed, thereby affecting current transfer on the conductive portion 1511.

By forming the gap between the protrusion 1511a and the bottom surface of the first groove 1411a, when the battery cells 13 are arranged at the fixing assembly 14, the gap can provide a predetermined mechanical pressing space for the conductive portion 1511 to avoid the deformation of the conductive portion 1511 when the conductive portion 1511 is pressed under the gravity of the battery cell 13. Therefore, it is possible to prevent electrical connection performance of the conductive portion 1511 from being affected.

According to some embodiments of the present disclosure, with continued reference to FIG. 7, the current collecting assembly 15 further includes a sampling member 152. The sampling member 152 is arranged in the fixing assembly 14 and electrically connected to the current collecting member 151.

The sampling member 152 is a device or component that monitors an input variable at a specific time period and converts the input variable into a sampling output variable. In some embodiments, the sampling member 152 may be configured to collect a current signal and/or a temperature signal of the battery cell 13. In some embodiments, the sampling member 152 may be a wire harness for sampling. The wire harness may include a plurality of sampling wires. Each conductive portion 1511 is connected to at least one of the plurality of sampling wires. Further, the conductive portion 1511 can be simultaneously connected to one electrode terminal 131 to allow for signal collection of the battery cell 13.

The sampling member 152 is configured to collect the current signal and/or the temperature signal of the battery cell 13 to monitor an operating state of each battery cell 13. Meanwhile, the sampling member 13 is arranged inside the fixing assembly 14, and therefore the sampling member 152 can be protected from being exposed outside the fixing assembly 14. In this way, electric leakage of the sampling member 152 can be avoided, and wear of the sampling member 152 can reduced.

According to some embodiments of the present disclosure, the sampling member 152 and the current collecting member 151 are integrally formed through injection molding.

The two components are integrally formed through the injection molding. In this way, a high degree of integration facilitates the current collecting assembly 15 to be assembled in the mounting recess 1411 and simplifies production process with an increase in productivity.

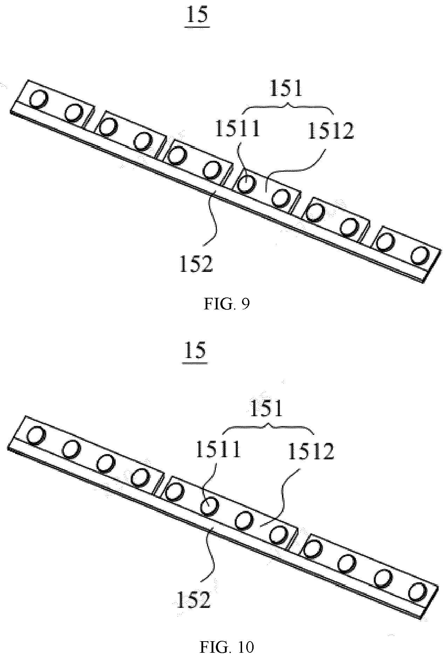

According to some embodiments of the present disclosure, with reference to FIGS. 9 to 10, the current assembly includes a plurality of current collecting members 151 arranged at intervals at a side of the sampling member 152.

The phase "arranged at intervals" means that the current collecting members 151 are isolated from and independent of each other. Since each of the current collecting member 151 includes the connection portion 1512 and the at least two conductive portions 1511, the connection portion 1412 is connected to the at least two conductive portions 1511, and each of the at least two conductive portions 1511 is connected to one of the electrode terminals 131 of one of the plurality of battery cells 13, one of the plurality of current collecting members 1511 enables an electrical connection to at least two battery cells 13. Referring to FIG. 9, illustratively, one current collecting member 151 is provided with two conductive portions 1511 to allow the current collecting member 151 to be electrically connected to two battery cells 13. Referring on to FIG. 10, illustratively, one current collecting member 151 is provided with four conductive portions 1511 to allow the current collecting member 151 to be electrically connected to four battery cells.

By arranging the plurality of current collecting members at intervals, it is possible to allow all battery cells in the battery pack to form a circuit.

According to some embodiments of the present disclosure, in a vertical direction, the electrode terminal 131 is in contact with the conductive portion 1511 or is connected to the conductive portion 1511 by a conductive adhesive.

The conductive adhesive is an adhesive that has a predetermined conductivity after being cured or dried. The conductive adhesive is configured to connect a plurality of electrically conductive materials together to form an electrical pathway between the connected materials.

It can be seen that the interference fit or the conductive adhesive connection between the electrode terminal 131 and the conductive portion 1511 can ensure reliability of the electrical connection between the electrode terminal 131 and the conductive portion 1511. Therefore, a series and/or parallel connection can be formed between the plurality of battery cells 13, which ensures stability of the internal circuit connection of the battery pack 1. In addition, compared with an assembling manner such as welding, the single battery cell13 can be easily separated from the current collecting assembly 15 through the assembling manner such as the contact fit or the conductive adhesive.

According to some embodiments of the present disclosure, with reference to FIGS. 2 to 4, there is provided a battery pack 1, a cavity of a case 10 contains ten battery cells 13 arranged side by side, and an electrode terminal 131 faces downwards in a vertical direction (i.e., a "Z" direction). An "X" direction represents a length direction of the case 10, and a "Y" direction represents a width direction of the case 10. The case 10 includes a housing 11 and an end cover12. The housing 11 is formed as a cavity and has an opening facing downwards. The end cover 12 is configured to cover the opening. Each of the ten battery cells 13 has two electrode terminals 131. Each of the two electrode terminals 131 faces towards the opened side of housing 11. The fixing assembly 14 is arranged between the battery cells and the end cover 12. It is further understood, with reference to FIG. 5, that the fixing assembly 14 has twenty connection holes 1421. The twenty connection holes 1421 are divided into two groups of connection holes 1421 arranged side by side, and each group of connection holes 1421 includes ten connection holes 1421. With reference to FIGS. 9 to 10, the current collecting assembly 15 further includes a sampling member 152. The sampling member 152 is connected to the current collecting member 152 by the connection portion 1512, and is configured to collect a current signal and/or a temperature signal of the battery cell 13.

According to some embodiments of the present disclosure, there is also provided a vehicle 100. With continued reference to FIG. 1, the vehicle 100 includes the battery pack 1 as described above.

The battery pack 1 serves as a core component of the vehicle 100. According to the embodiments of the present disclosure, the detachable maintenance of the single battery cell 13 can be easily realized. In this way, durability of the battery pack 1 is improved. Therefore, a cruising range of the vehicle 100 can be ensured and a service life of the vehicle 100 can be prolonged.

Although the present disclosure has been described with reference to optional embodiments, various improvements may be made thereto and components thereof may be replaced with equivalents without departing from the scope of the present disclosure. In particular, each of the technical features mentioned in the various embodiments may be combined in any manner as long as there is no structural conflict. The present disclosure is not limited to the particular embodiments disclosed herein, but includes all technical solutions falling within the scope of the claims.

## Claims

1. A battery pack, comprising:
a case having a cavity;
a plurality of battery cells received in the cavity, each of the plurality of battery cells comprising at least one electrode terminal protruding from the battery cell, and the at least one electrode terminal facing downwards when the battery cell is arranged in the cavity;
a fixing assembly arranged below the plurality of battery cells and supporting the plurality of battery cells, the fixing assembly having a connection hole; and
a current collecting assembly arranged at the fixing assembly, the current collecting assembly comprising a current collecting member configured to electrically connect at least two adjacent battery cells of the plurality of battery cells, the current collecting member comprising a connection portion and at least two conductive portions, wherein:
the connection portion is connected to the at least two conductive portions, and each of the at least two conductive portions is connected to one of the at least one electrode terminal of one of the plurality of battery cells; and
the at least one electrode terminal extends into the connection hole and is in contact with the conductive portion when the battery cell is arranged at the fixing assembly.

2. The battery pack according to claim 1, wherein the case comprises:
a housing formed as the cavity and having an opening facing downwards; and
an end cover configured to cover the opening,
wherein the fixing assembly is located between the plurality of battery cells and the end cover.

3. The battery pack according to claim 1 or 2, wherein the fixing assembly further comprises:
a first fixing plate having a mounting recess configured to accommodate the current collecting assembly; and
a second fixing plate covering the first fixing plate to fix the current collecting assembly in the mounting recess, the connection hole being defined at the second fixing plate and facing towards the conductive portion.

4. The battery pack according to claim 3, wherein the mounting recess comprises a first groove facing towards the connection hole.

5. The battery pack according to claim 4, wherein:
each of the at least two conductive portions comprises a protrusion arranged in the first groove; and
the conductive portion has a second groove formed at a surface of the conductive portion opposite to the protrusion, the at least one electrode terminal being inserted and engaged into the second groove.

6. The battery pack according to claim 5, wherein the number of the protrusions is equal to the number of the first grooves, one protrusion being arranged in one first groove.

7. The battery pack according to claim 5 or 6, wherein a gap is formed between the protrusion and a bottom surface of the first groove.

8. The battery pack according to any one of claims 1 to 7, wherein the current collecting assembly further comprises a sampling member arranged in the fixing assembly and electrically connected to the current collecting member.

9. The battery pack according to claim 8, wherein the sampling member and the current collecting member are integrally formed through injection molding.

10. The battery pack according to claim 8 or 9, wherein a plurality of current collecting members is provided and arranged at intervals at a side of the sampling member.

11. The battery pack according to any one of claims 1 to 10, wherein in a vertical direction, the at least one electrode terminal is in contact fit with the conductive portion or is connected to the conductive portion by a conductive adhesive.

12. A vehicle, comprising the battery pack according to any one of claims 1 to 11.
